# EUROPEAN PATENT APPLICATION

(11) **EP 4 530 041 A1**
(43) Date of publication of application: **02.04.2025**
(21) Application number: 24202005.5
(22) Date of filing: 23.09.2024
(51) Int. Cl.: B29C 33/44, B29C 45/26, B29C 45/33

(54) **MOLD FOR INJECTION MOLDING OF PLASTIC MATERIAL**

(30) Priority: 28.09.2023 IT 202300020034
(71) Applicant: Ivars S.p.A., 25078 Vestone (BS) (IT)
(72) Inventor: EBENESTELLI, Carlo, 25078 Vestone (BS) (IT)
(74) Representative: Sangiacomo, Ines

(57) **Abstract**

A mold (1) for injection molding of plastic material is described, comprising a threading system (5) for making threaded holes (7) in a molded piece (6), wherein the threading system comprises a rack (8) movable with a reciprocating rectilinear movement, movement means (9) active on the rack, a first gear (10) comprising a first and a second gearwheel (14, 15) for converting the reciprocating rectilinear motion into rotary motion, a second gear (11) for transmitting the rotary motion, comprising a first and a second couple of gear wheels (16, 17; 18, 19), six shafts (12) parallel to one another and each having a stem (22), opposing threaded end portions (23a, 23b) and a gear wheel (24) coaxial and integral with the stem, wherein the shafts are movable between a first forward position and a second backward position, and six supporting elements (13) each equipped with a threaded hollow (25) engaged by a threaded end portion of a respective shaft.

## Description

### Field of the invention

In its most general aspect, the present invention concerns the technical field of injection molding of plastic material.

In particular, the invention concerns a mold for producing integral backs for seats or individual so-named *up*/*down* systems for fastening backs for seats, and a process of injection molding plastic material by using the aforesaid mold.

### State of the art

As known, in the field of home and office furnishings, the known art provides chairs comprising a seat, a back and a pedestal or base, wherein the seat is combined with the back and the base.

The back, generally made of plastic material, can be a so-named integral back directly combined with the seat at a specific mechanism constrained to the latter, or can be a back combined with the seat via a so-named *up*/*down* system for backs, always at the aforesaid specific mechanism of the seat.

In any case, the fastening of the back to the seat is made by screws which engage a first series of holes provided on the aforesaid mechanism which is generally made of iron.

According to a first embodiment according to the known art, a second series of through holes corresponding to those of the aforesaid first series is also made on the back or on the aforesaid *up*/*down* system, wherein the screws, which thus engage the first series of holes and the second series of holes, are locked by respective nuts.

According to a second known embodiment, the aforesaid nuts are replaced by internally threaded metal inserts which engage the holes of the second series of holes, which holes must thus not necessarily be through holes. The aforesaid metal inserts can be inserted into the back while molding the respective piece, thus resulting embedded in the plastic material of the back, or can be inserted into the back after its molding by manually reworking the piece.

According to a third known embodiment, at a specific seat, a metal plate equipped with threaded holes (the aforesaid second series of holes) is constrained to the back or the respective *up*/*down* system, wherein the aforesaid screws are fastened to the metal plate.

Although addressing the purpose, the fastening solutions according to the known art set forth above are not free from drawbacks. For example, all the aforesaid solutions, in addition to the aforesaid screws, require additional components, such as the nuts, the metal inserts or the metal plate. Such additional components required for tightening the screws disadvantageously result in an increase in the final cost of the chair and over time may also result in loosening of the tightness itself, which can compromise the tightness of the back-seat assembly.

### Summary of the invention

The technical problem underlying the present invention was to provide a process of injection molding plastic material for molding integral backs for seats or individual so-named *up*/*down* systems for fastening backs for seats, which has characteristics such as to overcome one or more of the drawbacks mentioned above with reference to the known art.

According to the invention, the aforesaid problem is solved by a mold for injection molding plastic material, which is provided with a threading system which automatically makes threaded holes in the molded piece, integral back or *up*/*down* system for fastening backs.

Advantageously, the aforesaid mold makes the production of backs for seats, whether of so-named integral backs or backs with a so-named *up*/*down* system, more economic since the use of additional components for tightening the screws used to combine the back with a respective seat is no longer required, thus avoiding machining the piece following its molding.

According to the invention, the aforesaid mold comprises:
a cavity and a core, wherein at least one of the aforesaid cavity and the aforesaid core is movable, and which define, with the mold closed, a hollow shape corresponding to a piece to be molded,
at least one inlet channel arranged at the aforesaid cavity or the aforesaid core for injecting melted plastic material into the aforesaid hollow shape,
characterized by comprising a threading system for making threaded holes in the molded piece, wherein the aforesaid threading system comprises:
   a rack,
   movement means active on the aforesaid rack for moving the latter with a reciprocating rectilinear movement,
   a first gear for converting the aforesaid reciprocating rectilinear motion into rotary motion, wherein the aforesaid first gear comprises a first gear wheel and a second gear wheel coaxial and integral with one another, wherein the aforesaid first gear wheel, which has a radius smaller than the radius of the aforesaid second gear wheel, is geared with the aforesaid rack,
   a second gear for transmitting the aforesaid rotary motion, comprising a first couple of gear wheels and a second couple of gear wheels, wherein the gear wheels of each couple of gear wheels, which are coaxial and integral with one another, have different radii from one another, wherein the gear wheels of smaller diameter of each couple of gear wheels are geared with the aforesaid second gear wheel of the aforesaid first gear,
   six shafts parallel to one another, each having a stem, opposing threaded end portions (i.e. a first threaded end portion and a second threaded end portion opposite the first threaded end portion), and a gear wheel coaxial and integral with the stem, wherein the aforesaid shafts are movable between a first forward position and a second backward position, wherein the gear wheels of three shafts of the aforesaid six shafts are geared with the gear wheel of greater diameter of the aforesaid first couple of gear wheels of the aforesaid second gear and the gear wheels of the other three shafts of the aforesaid six shafts are geared with the gear wheel of greater diameter of the aforesaid second couple of gear wheels of the aforesaid second gear, and
   six supporting elements, a supporting element for each of the aforesaid six shafts, wherein each of the aforesaid supporting elements is equipped with a threaded hollow engaged by a threaded end portion of a respective shaft, wherein
   the aforesaid opposing threaded end portions of each of the aforesaid six shafts have a thread equal to one another and corresponding to the thread of the aforesaid supporting elements.

The expression "coaxial" denotes that the gear wheels or the shafts to which it refers have a common rotation axis.

In practice, the aforesaid shafts are components which make the threaded holes on the molded piece through one of the aforesaid threaded end portions, which is identified as first threaded end portion, while the other threaded end portion of each shaft, identified as second threaded end portion, is guided by a respective supporting element by engaging its respective threaded hollow.

The aforesaid supporting elements, also known as "bushing," thus constitute guides for the aforesaid shafts, which guides, during a rotary and backward movement of the shafts from the aforesaid first position to the aforesaid second position (unscrewing), advantageously set the forward pitch of the movement, which pitch is preferably equal to 1.25 mm. Thus, the aforesaid shafts and the aforesaid supporting elements preferably comprise threads having a pitch of 1.25 mm, corresponding to the distance between two consecutive crests of a respective thread.

The aforesaid supporting elements are preferably made of metal material, more preferably bronze.

The aforesaid gear wheels of greater diameter of the aforesaid first couple of gear wheels and of the aforesaid second couple of gear wheels of the aforesaid second gear preferably have a different number of teeth and different diameter from one another.

The distance between the aforesaid gear wheels of the aforesaid first couple of gear wheels of the aforesaid second gear is preferably different from, and preferably greater than, the distance between the aforesaid gear wheels of the aforesaid second couple of gear wheels of the aforesaid second gear.

In practice, in the aforesaid second gear, which has the purpose of transmitting and subdividing the rotary motion from the aforesaid first gear to the aforesaid shafts, the positions of the two gear wheels of greater diameter are staggered from one another.

The aforesaid six shafts preferably comprise a first series of three shafts identical to one another and a second series of two shafts identical to one another, the sixth shaft not having shafts identical to it.

The distance between the gear wheel of a shaft of the aforesaid first series of shafts and a respective end opposite the threaded end portion engaging the respective supporting element is preferably less than a corresponding distance of the gear wheels of the other shafts of the aforesaid six shafts. In other words, in each of the shafts of the aforesaid first series of shafts, the gear wheel is preferably closer to the end of the respective first threaded end portion compared to the gear wheels of the other shafts. The position of the gear wheels of the first series of shafts is thus preferably staggered with respect to the positions of the gear wheels of the remaining shafts.

The gear wheel of the aforesaid sixth shaft preferably has a diameter greater than the diameter of the gear wheels of the shafts of the aforesaid first series and of the aforesaid second series of shafts.

The gear wheel of the aforesaid sixth shaft preferably has a number of teeth greater than the number of teeth of the gear wheels of the shafts of the aforesaid first series and of the aforesaid second series of shafts.

The distance between the gear wheel of the aforesaid sixth shaft and the end of the respective first threaded end portion is preferably greater than a corresponding distance of the gear wheels of the other shafts of the aforesaid six shafts. In other words, in the aforesaid sixth shaft, the gear wheel is preferably further from the end of the respective first end portion compared to the gear wheels of the other shafts. The position of the gear wheel of the aforesaid sixth shaft is thus preferably staggered with respect to the positions of the gear wheels of the shafts of the aforesaid first series and of the aforesaid second series of shafts.

According to the above, the aforesaid hollow shape preferably corresponds to the shape of a so-named integral back for seat or to the shape of a so-named *up*/*down* system of a back for seat.

The aforesaid movement means preferably comprise a hydraulic cylinder with which the aforesaid rack is combined.

According to what is set forth above and according to the present invention, the aforesaid problem is further solved by a process of injection molding plastic material, in particular for molding backs or *up*/*down* systems of backs for seats, which comprises, in sequence:
an injecting step in which melted plastic material is injected into a mold of the aforesaid type;
a forming step in which the melted plastic material is shaped;
a cooling step in which the plastic material cools, thus forming a molded piece;
a threading step in which the aforesaid shafts of the mold are moved from the aforesaid first forward position to the aforesaid second backward position by means of a dual rotary and backward movement thus defining, in the molded piece, six threaded holes;
an opening step for opening the aforesaid mold; and
an ejecting step wherein the molded piece is ejected from the aforesaid mold.

The aforesaid six threaded holes preferably comprise a first series of three threaded holes arranged according to the vertexes of a first isosceles triangle, and a second series of three threaded holes arranged according to the vertexes of a second isosceles triangle, wherein the heights of the respective bases of the aforesaid first isosceles triangle and of the aforesaid second isosceles triangle lie on the same straight line.

Two threaded holes corresponding to two respective vertexes of the aforesaid first isosceles triangle and one threaded hole corresponding to a vertex of the aforesaid second isosceles triangle are preferably made with the shafts of the aforesaid first series of shafts.

### Brief description of the figures

Further characteristics and advantages of the invention will become clearer in the review of the following detailed description of a preferred, although not exclusive, embodiment illustrated by way of example and without limitations with the aid of the accompanying drawings, in which:
- figure 1 schematically shows a sectional side view of a mold for injection molding plastic material for making a back for a seat, wherein the mold comprises a cavity and a core and a threading system for making threaded holes in the aforesaid back, according to the present invention;
- figure 2 shows a plan view of the aforesaid cavity of the mold of figure 1;
- figure 3 shows a perspective view of the aforesaid threading system of the mold of figure 1;
- figures 4 and 5 show a side view of a detail of the threading system of figure 3, during two respective use steps of the mold of figure 1;
- figure 6 shows a front transparent view of a detail of the threading system of figure 3;
- figure 7 shows a front view of a detail of the aforesaid back for seat, comprising six threaded holes.

### Detailed description of the invention

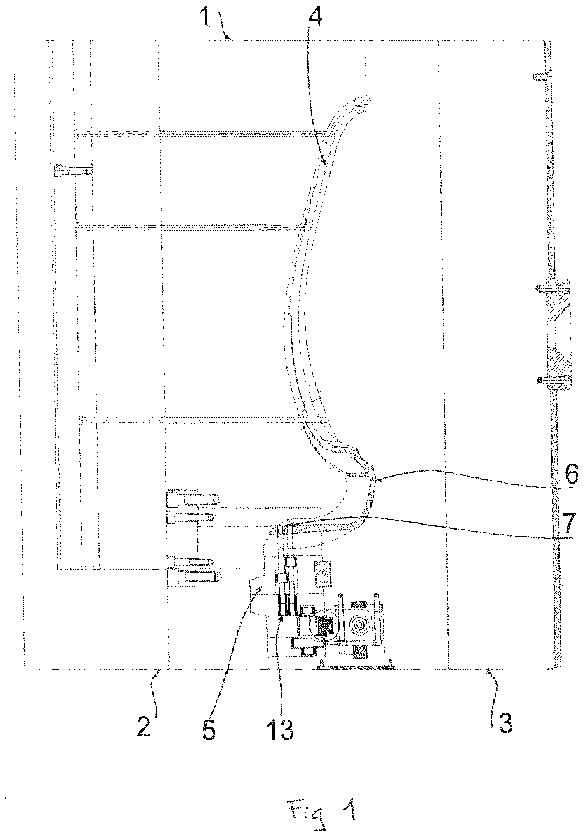

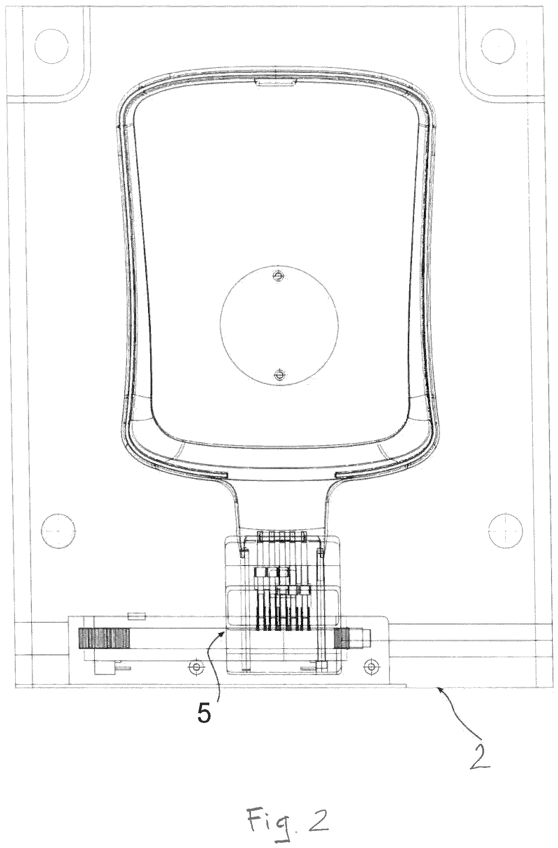

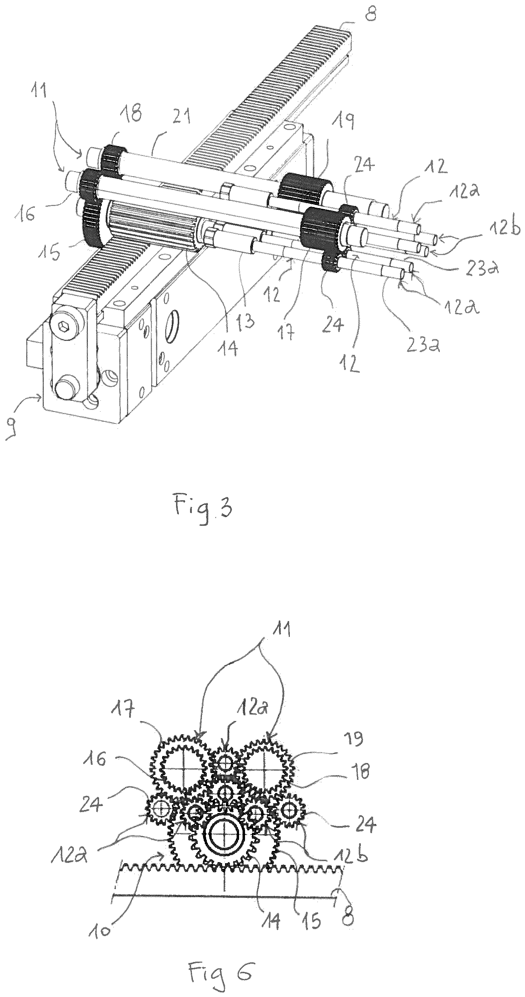

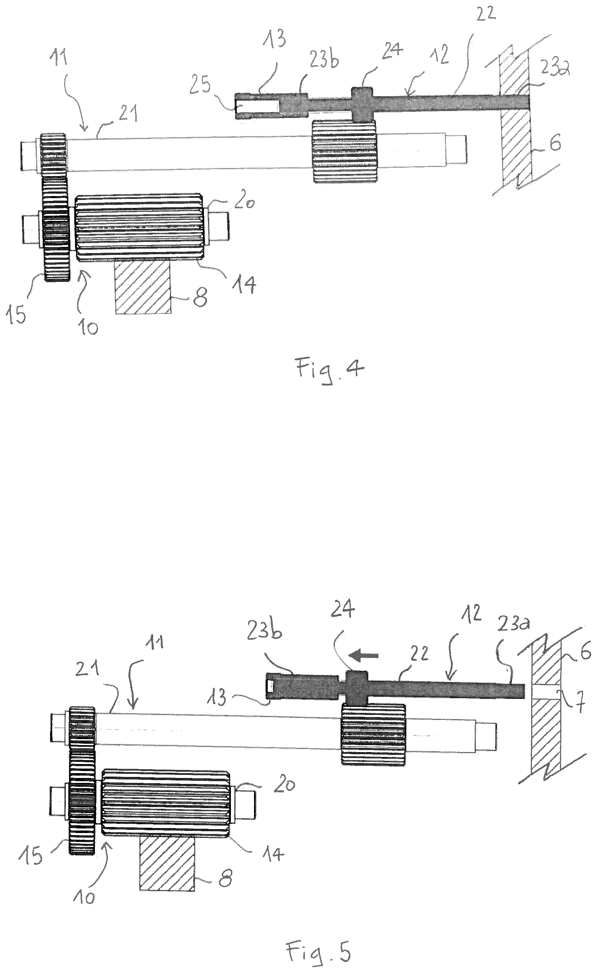

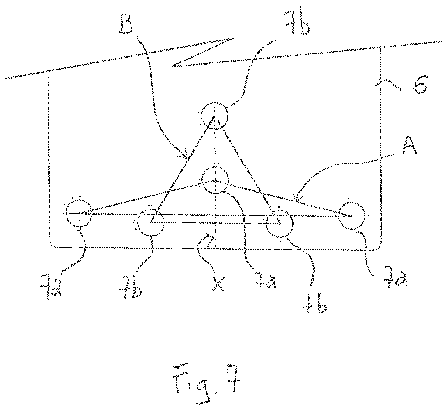

With reference to figures 1-7, a mold for the injection molding of plastic material provided with a threading system, according to the present invention, is denoted by **1.**

The aforesaid threading system automatically makes threaded holes in the molded piece which, according to the invention, can be a so-named integral back or a so-named *up*/*down* system of a back for seat.

In detail, the mold **1** essentially comprises a cavity **2** and a core **3,** wherein at least one of the cavity and the core is movable and which define, with the mold closed, a hollow shape **4** corresponding to the piece to be molded, at least one inlet channel arranged at the cavity or core for injecting melted plastic material into the hollow shape **4,** and the aforesaid threading system for making threaded holes in the molded piece, generally denoted by **5.**

In the examples of the aforesaid figures, the aforesaid molded piece denoted by **6** corresponds to an integral back and has threaded holes 7.

According to the invention, the threading system **5** essentially comprises a rack **8,** movement means **9** active on the rack **8** for moving the latter with a reciprocating rectilinear movement, a first gear generally denoted by **10** for converting the aforesaid reciprocating rectilinear motion into rotary motion, a second gear generally denoted by **11** for transmitting the aforesaid rotary motion, a plurality of threaded shafts for making the threaded holes **7,** each denoted by **12,** and a plurality of supporting elements, in particular one supporting element **13** for each of the shafts **12.**

In detail, the first gear **10** comprises a first gear wheel **14** and a second gear wheel **15** which are coaxial and integral with one another, wherein the first gear wheel **14** has a radius smaller than the radius of the second gear wheel **15,** and wherein the first gear wheel **14** is geared with the rack **8.**

The second gear **11** comprises a first couple of gear wheels denoted by **16** and **17,** and a second couple of gear wheels denoted by **18** and **19,** wherein the gear wheels of each couple of gear wheels, which are coaxial and integral with one another, have different radii from one another, wherein the gear wheels of smaller diameter **16, 18** of each couple of gear wheels are geared with the aforesaid second gearwheel **15** of the aforesaid first gear **10.**

In practice, the gear wheels of the first gear **10** and the gear wheels of the second gear **11** are mounted on, and integral with, respective stems **20, 21,** as illustrated in the examples of the aforesaid figures.

As far as the aforesaid plurality of threaded shafts is concerned, it should be said that it is formed by six shafts **12** parallel to one another, each having a stem **22,** opposing threaded end portions **23a** and **23b,** and a gear wheel **24** coaxial and integral with the stem **22.**

According to the invention, the shafts **12** are movable between a first forward position and a second backward position and, for the purpose, the gear wheels **24** of three shafts of the six shafts **12** are geared with the gear wheel **17** of greater diameter of the aforesaid first couple of gear wheels of the second gear **11** and the gear wheels **24** of the other three shafts of the six shafts **12** are geared with the gear wheel **19** of greater diameter of the aforesaid second couple of gear wheels of the second gear **11** and, moreover, each of the six supporting elements **13** is equipped with a respective threaded hollow **25** engaged with a threaded end portion of a respective shaft **12.**

In practice, the shafts **12** are components which make the threaded holes **7** on the threaded piece **6** through one of the aforesaid threaded end portions, which is identified as first threaded end portion **23a,** while the other threaded end portion of each shaft, identified as second threaded end portion **23b,** is guided by a respective supporting element **13** by engaging its respective threaded hollow **25.**

The supporting elements **13,** which are preferably made of metal material, more preferably of bronze, and which are also known as "bushing," thus constitute guides for the aforesaid thread shafts, which guides, during the rotary and backward movement of the shafts **12** from the aforesaid first forward position to the aforesaid second backward position (unscrewing), advantageously set the forward pitch of the movement, which pitch is preferably equal to 1.25 mm.

Thus, the opposing threaded end portions **23a, 23b** in each of the six shafts **12** preferably have a thread equal to one another and corresponding to the thread of the respective supporting element **13,** which threads preferably have a pitch of 1.25 mm which corresponds to the distance between two consecutive crests of a respective thread.

According to the examples of the figures, it should be said that the gear wheels of greater diameter of the aforesaid first couple of gear wheels and of the aforesaid second couple of gear wheels of the second gear **11,** i.e. the gear wheels **17** and **19,** respectively, preferably have a different number of teeth and a different diameter from one another.

Moreover, the distance between the two gear wheels **16, 17** of the first couple of gear wheels of the second gear **11** is preferably different from, and in particular greater than, the distance between the two gear wheels **18, 19** of the second couple of gear wheels of the second gear **11.**

In practice, in the second gear **11,** which has the purpose of transmitting and subdividing the rotary motion from the first gear **10** to the shafts **12,** the positions of the two gear wheels **17, 19** of greater diameter are staggered from one another, the gear wheel **17** of the first couple of gear wheels being closer to the end of the respective first threaded end portion **23a** than the gear wheel **19** of the second couple of gear wheels.

According to the examples of the figures, it should be added that the six shafts **12** preferably comprise a first series of three shafts **12a** identical to one another and a second series of two shafts **12b** identical to one another, the sixth shaft not having shafts identical to it.

Still, as far as the shafts **12** are concerned, it should be said that the distance between the gear wheel **24** of a shaft **12a** of the aforesaid first series of shafts and the end of the respective first threaded end portion **23a,** i.e. the end opposite the respective supporting element **13,** is preferably less than a corresponding distance of the gear wheels in the other three shafts of the six shafts **12.** In other words, in each of the shafts **12a** of the aforesaid first series of shafts, the gear wheel **24** is preferably closer to the end of the respective first threaded end portion **23a** compared to the gear wheels of the other shafts and, therefore, the position of the gear wheels **24** of the shafts **12a** of the first series of shafts is preferably staggered with respect to the positions of the gear wheels of the remaining shafts.

Moreover, the gear wheel **24** of the aforesaid sixth shaft preferably has a diameter greater than the diameter of the gear wheels of the shafts of the aforesaid first series and the aforesaid second series of shafts.

Moreover, the gear wheel **24** of the aforesaid sixth shaft preferably has a number of teeth greater than the number of teeth of the gear wheels of the shafts of the aforesaid first series and the aforesaid second series of shafts.

Moreover, the distance between the gear wheel **24** of the aforesaid sixth shaft and the end of the respective first threaded end portion **23a,** i.e. the end opposite the respective supporting element **13,** is preferably greater than a corresponding distance of the gear wheels in the other five shafts. In other words, in the aforesaid sixth shaft, the gear wheel is preferably further from the end of the respective first threaded end portion compared to the gear wheels of the other shafts. The position of the gear wheel of the aforesaid sixth shaft is thus preferably staggered with respect to the positions of the gear wheels of the shafts of the aforesaid first series and of the aforesaid second series of shafts.

As far as the aforesaid movement means **9** are concerned, it should be said that they preferably comprise a hydraulic cylinder with which the aforesaid rack is combined, the possibility of providing different movements means, for example electric, not however being excluded. When the movement means comprise a hydraulic cylinder, the forward and backward movement of the rack is achieved by means of pressurized oil.

According to what is set forth above, the present invention further provides a process of injection molding plastic material for molding, by means of a mold of the type considered above, integral backs or *up*/*down* systems for fastening backs for seats, which comprises, in sequence:
an injecting step in which melted plastic material is injected into the mold **1;**
a forming step in which the melted plastic material is shaped;
a cooling step in which the plastic material cools, thus forming the molded piece **6;**
a threading step in which the shafts **12** of the threading system **5** of the mold are moved from the aforesaid first forward position to the aforesaid second backward position by means of a dual rotary and backward movement thus defining, in the molded piece **6,** six threaded holes **7;**
an opening step for opening the mold **1**; and
an ejecting step wherein the molded piece **6** is ejected from the mold **1.**

In practice, at the beginning of the molding cycle, the six threaded shafts are in the forward position, so as to form the six threaded holes on the molded piece. In particular, after having filled the hollow of the mold with the plastic material, the first threaded end portions of the six threaded shafts are completely enveloped by the melted plastic material which solidifies once cooled, thus forming the threaded holes on the molded piece. Once the cooling step is completed, the unscrewing step is carried out before opening the mold, specifically the so-named hydraulic unscrewing step in which the six threaded shafts move backward and rotate, thus releasing the threaded holes on the molded piece.

In particular, the threaded shafts move backward following the pattern of the screw-shaped profile created in the molded piece and thus make a backward rotation. In particular, the two synchronized rotary and backward movements occur in the following way:
The rotation originates in the movement means which, via the rack, transmit the motion to the first gear and thus to the second gear, which in turn transmits it to the threaded shafts;
The backward movement of each threaded shaft is guided by a respective supporting element, or bushing which, having the same thread made on the threaded shaft, makes the threaded shaft move backward of a pitch of the thread for each revolution completed. Thus, the threaded shaft moves 1.25 mm backward for each revolution.

Once the threaded shafts have moved backward, i.e. after the molded piece has been, so-to-speak, released from the six threaded shafts, the mold is opened and the molded piece is ejected.

The six threaded holes **7** preferably comprise a first series of three threaded holes **7a** arranged according to the vertexes of a first isosceles triangle **A,** and a second series of three threaded holes **7b** arranged according to the vertexes of a second isosceles triangle **B,** wherein the heights of the respective bases of the first isosceles triangle **A** and of the second isosceles triangle **B** lie on the same straight line **X.**

According to the invention, it should be said that two threaded holes corresponding to two respective vertexes of the first isosceles triangle **A** and a threaded hole corresponding to a vertex of the second isosceles triangle **B** are preferably made with the shafts **12a** of the aforesaid first series of shafts.

The advantages of the present invention, which are made clear in the description set forth above, can be summarized by noting that a mold for the injection molding of plastic material, which generally makes the production of backs for seats, whether of so-named integral backs or backs with the so-named *up*/*down* system, more economic overall is provided, since the use of additional components for tightening the screws used to combine the back with a respective seat is no longer required, and avoids machining of the piece following its molding.

The present mold, together with the process according to the present invention, further allows to improve the quality of the molded pieces.

In order to meet contingent and specific needs, a technician of the field can make numerous changes and modifications to the present invention in the embodiments shown and described, all thereby comprised in the protection scope of the invention as defined by the following claims.

## Claims

1. Mold (1) for injection molding of plastic material, comprising:
a cavity (2) and a core (3), wherein at least one of said cavity (2) and said core (3) is movable, and which define, with the mold closed, a hollow shape (4) corresponding to a piece to be molded,
at least one inlet channel for injecting melted plastic material into said hollow shape (4),
**characterized by** comprising a threading system (5) for making threaded holes (7) in a molded piece (6), wherein said threading system (5) comprises
a rack (8),
movement means (9) active on said rack (8) for moving the latter with a reciprocating rectilinear movement,
a first gear (10) for converting said reciprocating rectilinear motion into rotary motion, comprising a first gear wheel (14) and a second gear wheel (15) coaxial and integral with one another, wherein said first gear wheel (14), which has a radius smaller than the radius of said second gear wheel (15), is geared with said rack (8),
a second gear (11) for transmitting said rotary motion, comprising a first couple of gear wheels (16, 17) and a second couple of gear wheels (18,19), wherein the gear wheels of each couple of gear wheels, which are coaxial with one another and which have different radii from one another, are integral with one another, wherein the gear wheels (16, 18) of smaller diameter of each couple of gear wheels are geared with said second gear wheel of said first gear (15),
six shafts (12) parallel to one another, each having a stem (22), a first threaded end portion (23a) and an opposing second threaded end portion (23b), and a gear wheel (24) coaxial and integral with the stem (22), wherein said shafts (12) are movable between a first forward position and a second backward position, wherein the gear wheels (24) of three shafts (12a) of said six shafts (12) are geared with the gear wheel (17) of greater diameter of said first couple of gear wheels of said second gear (11) and the gear wheels of the other three shafts of said six shafts are geared with the gear wheel (19) of greater diameter of said second couple of gearwheels of said second gear (11), and
six supporting elements (13), a supporting element for each of said six shafts (12), wherein each supporting element (13) is equipped with a threaded hollow (25) engaged by the second threaded end portion (23b) of a respective shaft, wherein
said opposing first and second threaded end portions (23a, 23b) of each of said six shafts (12) have a thread equal to one another and corresponding to the thread of said supporting elements (13).

2. Mold according to claim 1, wherein the gearwheels (17, 19) of greater diameter of said first couple of gear wheels and said second couple of gear wheels of said second gear (11) have a different number of teeth and different diameter from one another.

3. Mold according to claim 1 or 2, wherein the distance between the gear wheels (16, 17) of said first couple of gear wheels is different from the distance between the gear wheels (18, 19) of said second couple of gear wheels of said second gear (11).

4. Mold according to any one of the preceding claims, wherein said six shafts (12) comprise a first series of three shafts (12a) identical to one another and a second series of two shafts (12b) identical to one another, the sixth shaft not having shafts identical to it.

5. Mold according to claim 4, wherein the distance between the gear wheel (24) of a shaft (12a) of said first series of shafts and an end of the respective first threaded end portion (23a) is less than a corresponding distance of the gear wheels (24) of the other shafts of said six shafts (12).

6. Mold according to claim 4 or 5, wherein the gear wheel (24) of said sixth shaft has a diameter greater than the diameter, and a number of teeth greater than the number of teeth, respectively, of the gear wheels (24) of the shafts (12a, 12b) of said first series and said second series of shafts.

7. Mold according to claim 4, 5 or 6, wherein the distance between the gear wheel (24) of said sixth shaft and an end of the respective first threaded end portion is greater than a corresponding distance of the gear wheels (24) of the other shafts of said six shafts (12).

8. Mold according to any one of the preceding claims, wherein said hollow shape (4) corresponds to the shape of a back for a seat or to the shape of an *up*/*down* system of a back for a seat.

9. Mold according to any one of the preceding claims, wherein said movement means (9) comprise a hydraulic cylinder to which said rack (8) is combined.

10. Mold according to any one of the preceding claims, wherein said shafts (12) and said supporting elements (13) comprise threads having a pitch of 1.25 mm.

11. Process of injection molding plastic material, comprising, in sequence:
an injecting step in which melted plastic material is injected into a mold (1) according to any one of the preceding claims;
a forming step in which the melted plastic material is shaped;
a cooling step in which the plastic material cools, thus forming a molded piece (6);
a threading step in which said shafts (12) are moved from said first forward position to said second backward position by means of a rotary and backward movement thus defining, in said molded piece (6), six threaded holes (7);
an opening step for opening said mold (1); and
an ejecting step wherein said molded piece (6) is ejected from said mold.

12. Process according to claim 11, wherein said six threaded holes (7) comprise a first series of three threaded holes (7a) arranged according to the vertexes of a first isosceles triangle (A), and a second series of three threaded holes (7b) arranged according to the vertexes of a second isosceles triangle (B), wherein the heights of the respective bases of said first isosceles triangle (A) and said second isosceles triangle (B) lie on the same straight line (X).

13. Process according to claim 12, wherein two threaded holes corresponding to two respective vertexes of said first isosceles triangle (A) and one threaded hole corresponding to a vertex of said second isosceles triangle (B) are made with the shafts (12a) of said first series of shafts.
